(19) Europäisches Patentamt
European Patent Office
Office européen des brevets

(11) **EP 2 150 081 A2**

(12) **EUROPEAN PATENT APPLICATION**

(43) Date of publication:
**03.02.2010 Bulletin 2010/05**

(51) Int Cl.:
***H04W 36/22*** (2009.01)

(21) Application number: **09166372.4**

(22) Date of filing: **24.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **29.07.2008 JP 2008195419**

(71) Applicant: **Fujitsu Ltd.**
**Kawasaki-shi, Kanagawa 211-8588 (JP)**

(72) Inventor: **Watanabe, Kimio**
**Kawasaki-shi, Kanagawa 211-8588 (JP)**

(74) Representative: **Holtby, Christopher Lawrence**
**Haseltine Lake LLP**
**Lincoln House, 5th Floor**
**300 High Holborn**
**London WC1V 7JH (GB)**

(54) **Base station and resources securing method**

(57) A base station includes a required resources determination unit which determines the amount of free resources to be secured for a local cell based on statistical information including a record of how resources have actually been used. The base station includes a handover object selection unit which selects a mobile station capable of being handed over to another cell among mobile stations within the local cell if the actual amount of free resources is smaller than the amount of free resources to be secured as determined by the required resources determination unit. The base station includes a connection control unit which hands over the mobile station selected by the handover object selection unit to another cell.

FIG. 1

**Description**

FIELD

The present invention relates to a base station and a resources securing method.

BACKGROUND

In recent years, services requiring high bit rates (e.g., video distribution) have come into widespread use in a radio communication system such as a cellular phone system. Along with the spread of such services requiring high bit rates, there is a strong need for realization of a technique for securely executing handover. This is because high bit rate communication requires more resources than low bit rate communication, and handover is likely to fail due to insufficient resources of a cell as a handover destination.

Examples of a known technique for securely executing handover include a technique in which a mobile station requests a base station as a handover destination to secure resources before execution of handover, and then handover is executed after securing of resources is completed (see, e.g., Japanese Laid-Open Patent Publications No. 2003-348007 and No. 2004-336424).

Even if a request is made to secure resources before execution of handover, like the above-described technique, when a base station as a handover destination has a shortage of resources, resources cannot be secured, and handover fails. As described above, even if a request is made to a base station as a handover destination in advance to secure resources, handover is not always securely executed.

The disclosed technique has been developed to solve the above-described problem of the prior art. It is desirable to provide a base station and a resources securing method capable of improving the continuity of communication at the time of execution of handover.

SUMMARY

According to an aspect of the invention, a base station includes a required resources determination unit which determines the amount of free resources to be secured for a local cell based on statistical information including a record of how resources have actually been used. The base station includes a handover object selection unit which selects a mobile station capable of being handed over to another cell among mobile stations within the local cell if the actual amount of free resources is smaller than the amount of free resources determined by the required resources determination unit to be secured. The base station includes a connection control unit which hands over the mobile station selected by the handover object selection unit to another cell.

The advantages of the invention may be realized and attained by means of the elements and combinations particularly pointed out in the claims.

It is to be understood that both the foregoing general description and the following detailed description are exemplary and explanatory and are not restrictive of the invention, as claimed.

BRIEF DESCRIPTION OF DRAWINGS

FIG. 1 is a diagram illustrating the overview of a resources securing method according to an embodiment of the invention;
FIG. 2 is a view illustrating an example of a traffic model;
FIG. 3 is a view illustrating an example of a case where there is nonuniformity in handover rate;
FIG. 4 is a block diagram illustrating the configuration of a base station according to the embodiment;
FIG. 5 is a chart illustrating an example of local station statistical information;
FIG. 6 is a chart illustrating an example of adjacent station statistical information;
FIG. 7 is a chart illustrating an example of a conversion table stored in a free resources conversion table storage unit;
FIG. 8A is a chart illustrating an example of a QoS conversion table with QoS maintenance;
FIG. 8B is a chart illustrating an example of a QoS conversion table without QoS maintenance; and
FIG. 9 is a flow chart illustrating the procedure for a resources securing process.

DESCRIPTION OF EMBODIMENTS

A preferred embodiment of a base station and a resources securing method disclosed by the present application will be described in detail below with reference to the accompanying drawings. Note that, for the sake of simplicity, a case where one base station forms only one cell will be described in the following explanation. A technique disclosed by the present application, however, may also be applied to a case where one base station forms a plurality of cells.

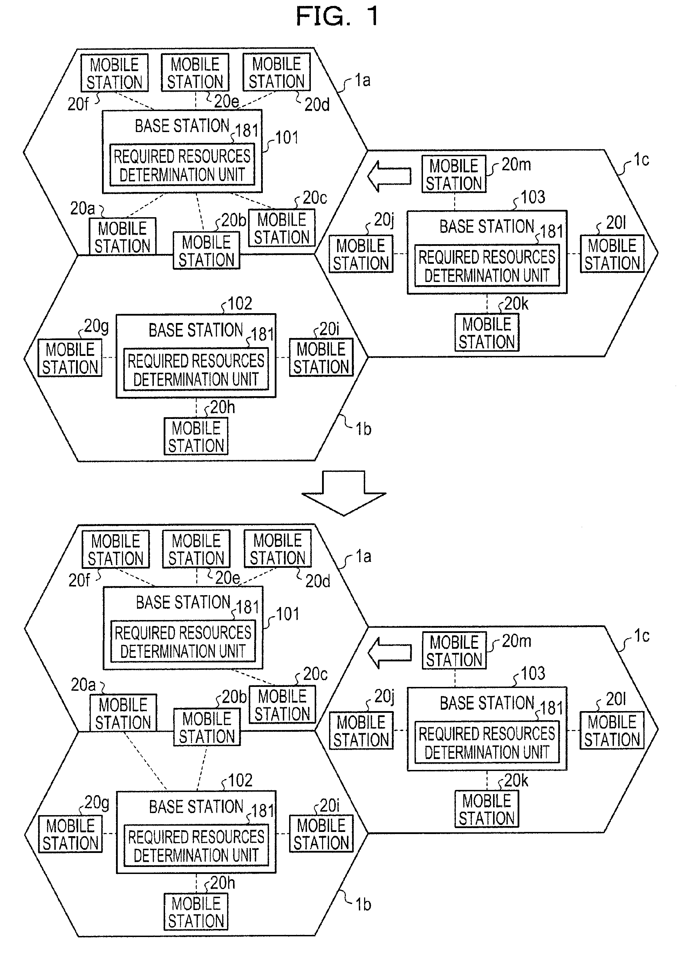

The overview of a resources securing method according to this embodiment will be described first. FIG. 1 is a diagram illustrating the overview of the resources securing method according to this embodiment. In FIG. 1, a cell 1a formed by a base station 101, a cell 1b formed by a base station 102, and a cell 1c formed by a base station 103 are adjacent to each other. Mobile stations 20a to 20f are within the cell 1a and perform communication via the base station 101. Mobile stations 20g to 20i are within the cell 1b and perform communication via the base station 102. Mobile stations 20j to 20m are within the cell 1c and perform communication via the base station 103.

Assume here that the mobile station 20m is moving from the cell 1c toward the cell 1a while performing communication. In this case, unless there are enough free resources in the cell 1a, the base station 101 may not allocate resources to the mobile station 20m. This results in unsuccessful handover of the mobile station 20m and a communication disconnect. The term "resources" here refers to, e.g., a band and/or the number of communication channels.

In order to prevent the occurrence of a communication breakdown, a required resources determination unit 181 of the base station 101 predicts the amount of resources required for the cell 1a. If resources are not present in the amount determined according to the amount of required resources predicted by the required resources determination unit 181, the base station 101 hands over a mobile station capable of being handed over to another cell to secure free resources. In the example of FIG. 1, handover of the mobile stations 20a and 20b from the cell 1a to the cell 1b allows free resources to be secured in the cell 1a and allows the mobile station 20m to be handed over to the cell 1a.

Note that the cells 1a and 1b which receive or hand over the mobile stations 20a and 20b may be different cells (e.g., geographically adjacent cells) in a single radio system. Alternatively, the cells 1a and 1b may be cells at different frequencies in a single radio system which cover the same geographical area. Alternatively, the cells 1a and 1b may be cells in different radio systems.

As described above, even if a mobile station cannot be handed over to a target cell, handover of another mobile station within the cell to another cell may make securing required free resources possible and may allow handover.

Note that the prediction of the amount of required resources may be performed based on how resources have actually been used. In this case, since resources usage varies depending on a day of the week and on a time period, it is desirable to record resources usage for each combination of a day of the week and a time period and perform prediction. Alternatively, the prediction of the amount of required resources may be performed based on a monitoring result while the movement status of each mobile station is constantly monitored.

The process of handing over a mobile station capable of being handed over from a cell to another cell in order to secure free resources may be performed when a certain mobile station is being handed over from another cell to the cell formed by the base station in question (hereinafter referred to as a "local cell"). However, in this case, the process of handing over the mobile station capable of being handed over to the other cell may be performed too late, and handover of the mobile station trying to move to the local cell may fail.

Alternatively, a specific number of mobile stations capable of being handed over may be handed over periodically in order to secure free resources. However, in this case, handover may be performed more times than necessary, and a communication breakdown may often occur. This is because the success of handover cannot be ensured.

As described above, the process of predicting the amount of required resources and securing free resources based on the prediction result makes it possible to secure only a required amount of resources without executing handover more times than necessary. Since required resources are secured in advance, it is less likely that resources are secured too late when a certain mobile station is being handed over from another cell to a local cell.

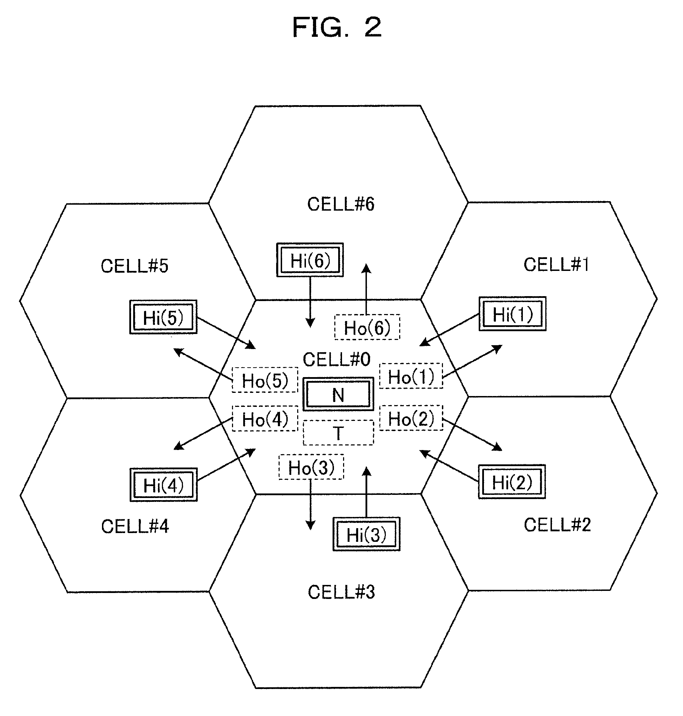

A method for predicting the amount of required resources based on how resources have actually been used will be described with reference to a traffic model in FIG. 2. The amount R of resources required for a cell having m adjacent cells is calculated by, e.g., the following formula (1):

$$R = \sum_{L=1}^{m} Hi(i) + N - \sum_{L=1}^{m} Ho(i) - T \qquad \ldots \text{(formula 1)}$$

In the formula (1), "Hi(i)" is the amount of resources used by a mobile station to be handed over from the i-th adjacent cell. Letting "Rn(i)" be the amount of resources used of the i-th adjacent cell, and "hi(i)" be a handover rate from the i-th adjacent cell to the cell in question, "Hi(i)" is calculated by the following formula (2):

$$Hi(i) = Rn(i) \times hi(i) \qquad \ldots \texttt{(formula 2)}$$

In the formula (1), "N" is the amount of resources used by a mobile station which starts a new communication in the local cell. Letting "Rorg" be the amount of resources used by a mobile station which starts a new communication in the local cell and "n" be the number of mobile stations per unit time which start a new communication in the local cell, "N" is calculated by the following formula (3):
$$N = Rorg \times n \qquad \ldots \texttt{(formula 3)}$$

In the formula (1), "Ho(i)" is the amount of resources used by a mobile station to be handed over to the i-th adjacent cell. Letting "Rs" be the amount of resources used of the local cell and "ho(i)" be a handover rate from the local cell to the i-th adjacent cell, "Ho(i)" is calculated by the following formula (4):
$$Ho(i) = Rs \times ho(i) \qquad \ldots \texttt{(formula 4)}$$

In the formula (1), "T" is the amount of resources used by a mobile station which ends communication in the local cell. Letting "Rs" be the amount of resources used of the local cell and "t" be a rate of occurrence of the end of communication in the local cell, "T" is calculated by the following formula (5):
$$T = Rs \times t \qquad \ldots \texttt{(formula 5)}$$

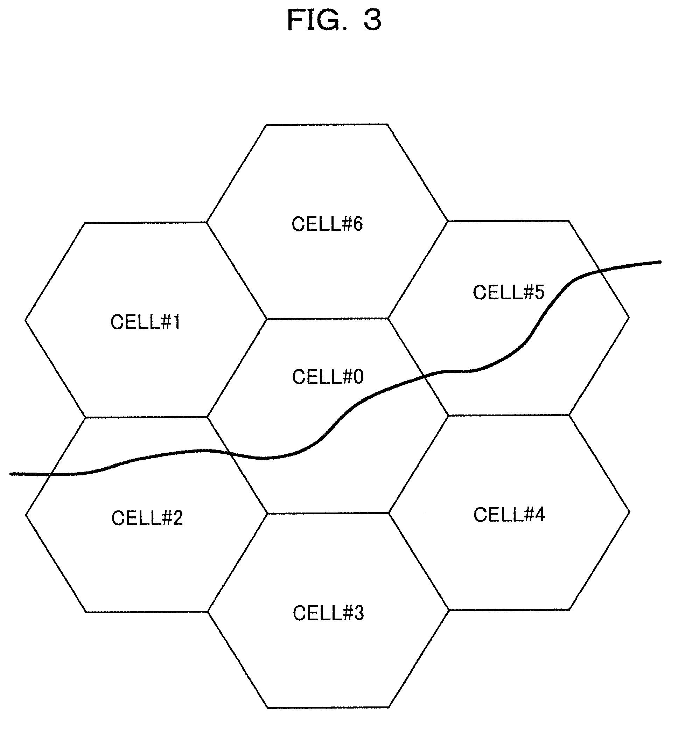

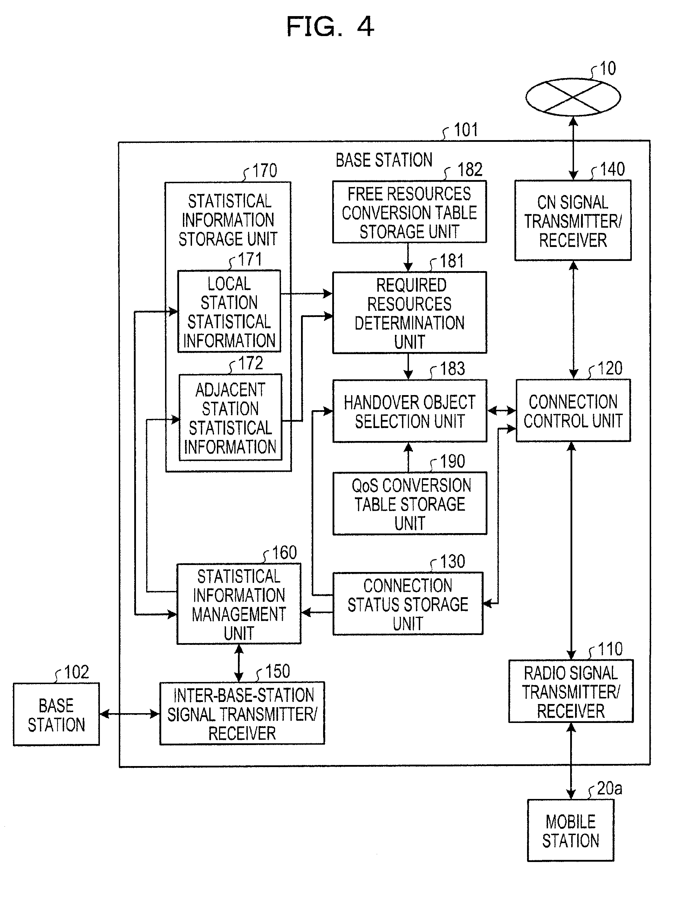

By taking a handover rate into consideration in the above-described manner, it is possible to appropriately reflect variations in the resources usage of each adjacent cell in a prediction of the amount of required resources of a local cell. For example, assume a case where a railroad or a road is laid to pass through cells #5, #0, and #2 in an environment in which cells #1 to #6 are adjacent to cell #0, as illustrated in FIG. 3. In this case, a handover rate between cells #0 and #5 and a handover rate between cells #0 and #2 are higher than handover rates between other combinations of the cells, and the amount of required resources of cell #0 is significantly affected by the amounts of resources used of cells #2 and #5. By considering a handover rate in this way, it may be possible to appropriately reflect the amounts of resources used of cells #2 and #5 and predict the amount of required resources.
Note that, in the above formulae (2) to (5), each parameter may have a value derived from a piece of information corresponding to the day of the week and/or time period in question from among the pieces of information recorded for all possible combinations of a day of the week and a time period. This is because, as described above, such a value may vary depending on the day of the week and the time period, and the use of a piece of information corresponding to the day of the week and time period in question allows an improvement in prediction accuracy.
Alternatively, in the above formulae (2) to (5), each parameter may take as its value the average value or the latest value of values derived from a plurality of pieces of information recorded for the day of the week and time period in question from among the pieces of information recorded for all possible combinations of a day of the week and a time period. When an average value is used, even if an unusual value is accidentally obtained as the latest value, a stable prediction result may be obtained without being affected by the unusual value. On the other hand, when the latest value is used, even if a different situation from usual continues (e.g., when an event is being held), appropriate prediction may be performed. Note that some of the parameters may take an average value as its value while others may take the latest value as its value. Alternatively, a value obtained by taking into consideration both an average value and the latest value (e.g., a value obtained by correcting the average value using the latest value) may also be adopted as the value of a parameter.
The configuration of a base station which performs a handover method according to this embodiment will be described. FIG. 4 is a block diagram illustrating the configuration of the base station 101 illustrated in FIG. 1. Note that parts irrelevant to the handover method according to this embodiment are not illustrated in FIG. 4. The base stations 102 and 103 illustrated in FIG. 1 have the same configuration as that of the base station 101.

As illustrated in FIG. 4, the base station 101 has a radio signal transmitter/receiver 110, a connection control unit 120, a connection status storage unit 130, a core network signal transmitter/receiver (hereinafter referred to as a "CN signal transmitter/receiver") 140, an inter-base-station signal transmitter/receiver 150, a statistical information management unit 160, a statistical information storage unit 170, a required resources determination unit 181, a free resources conversion table storage unit 182, a handover object selection unit 183, and a QoS (Quality of Service) conversion table storage unit 190.

The radio signal transmitter/receiver 110 performs radio communication with a mobile station such as the mobile station 20a. The connection control unit 120 controls connection of communication performed by the radio signal transmitter/receiver 110. For example, when a mobile station communicating with the base station 101 is approaching the end of a corresponding cell, the radio signal transmitter/receiver 110 causes the mobile station to measure the reception quality of an adjacent cell and determines whether handover can be executed. The radio signal transmitter/receiver 110 instructs a mobile station capable of being handed over to conduct handover.

The connection status storage unit 130 stores various types of information for the connection control unit 120 to control connection of communication, such as the status and attribute information of each mobile station communicating with the base station 101. The CN signal transmitter/receiver 140 mediates communication with a host device (not illustrated) connected to a core network 10 performed by the connection control unit 120. The inter-base-station signal transmitter/receiver 150 communicates with another base station such as the base station 102.

The statistical information management unit 160 calculates, for each combination of a day of the week and a time period, the amount of resources used in the local cell, the amount of resources used by a mobile station which starts a new communication in the local cell, the number of mobile stations per unit time which start a new communication in the local cell, a rate of occurrence of new communications, a rate of occurrence of communication terminations, and handover rates to adjacent cells based on the pieces of information stored in the connection status storage unit 130. The statistical information management unit 160 causes the statistical information storage unit 170 to store the calculation result as local station statistical information 171.

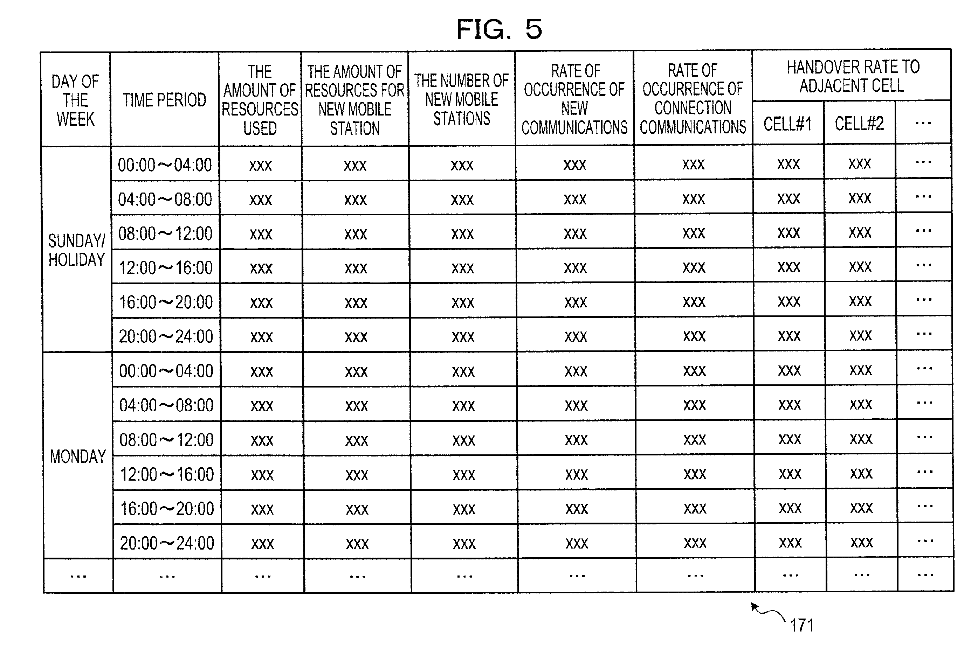

FIG. 5 is a chart illustrating an example of the local station statistical information 171. As illustrated in FIG. 5, the amount of resources used in the local cell, a rate of occurrence of new communications, a rate of occurrence of communication terminations, and handover rates to adjacent cells are stored in the local station statistical information 171 for each combination of a day of the week and a time period.

The statistical information management unit 160 exchanges information on the amount of resources used and information on a handover rate with an adjacent base station via the inter-base-station signal transmitter/receiver 150 and causes the statistical information storage unit 170 to store acquired information as adjacent station statistical information 172. The statistical information management unit 160 transmits, to a base station forming an adjacent cell, a handover rate to the adjacent cell at each time period of each day of the week together with the amount of resources used of the local cell at the same time period of the same day of the week. The statistical information management unit 160 stores, in the adjacent station statistical information 172, transmitted handover rates and the transmitted amounts of resources used as handover rates from the cell formed by the base station as a transmission source to the local cell and as the amounts of resources used of the cell formed by the base station that is the transmission source.

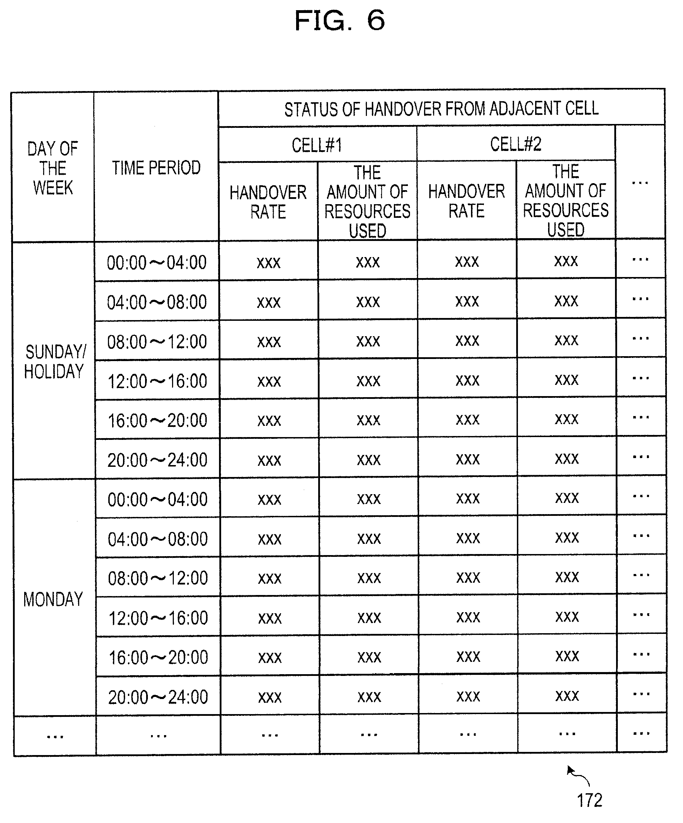

FIG. 6 is a chart illustrating an example of the adjacent station statistical information 172. As illustrated in FIG. 6, handover rates from adjacent cells to the local cell together with the amounts of resources used of the adjacent cells are stored in the adjacent station statistical information 172 for each combination of a day of the week and a time period.

Note that the statistical information management unit 160 may transmit the amount of resources used or a handover rate to an adjacent cell in the local station statistical information 171 to a corresponding base station every time the information is updated or may transmit the updated information to the base station only when the difference from a value transmitted the last time is larger than a specific value. Transmitting the amount of resources used and a handover rate to an adjacent cell to a corresponding base station every time the pieces of information are updated makes it possible to keep information up-to-date and improves the accuracy of prediction of required resources in the base station forming the adjacent cell. In contrast, transmitting the amount of resources used and a handover rate to an adjacent cell to a corresponding base station only when a difference from the last value of each parameter is larger than a specific value makes it possible to reduce the traffic between base stations and the load on the statistical information management unit 160.

The required resources determination unit 181 acquires pieces of information corresponding to the current day of the week and time period from the local station statistical information 171 and the adjacent station statistical information 172, applies the acquired pieces of information to the above formulae (1) to (5), and calculates the amount of resources required by the local cell. The required resources determination unit 181 acquires the amount of free resources corresponding to the calculated amount of required resources from the free resources conversion table storage unit 182.

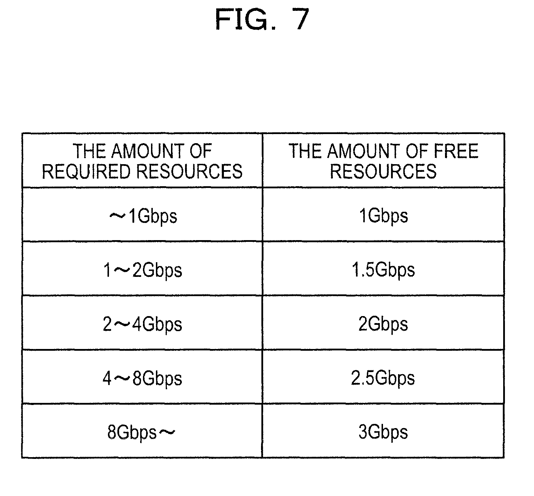

FIG. 7 is a chart illustrating an example of a conversion table stored in the free resources conversion table storage unit 182. As illustrated in FIG. 7, a correspondence between the amount of required resources and the amount of free resources is registered in advance in the free resources conversion table storage unit 182. The term "the amount of required resources" refers to a value obtained by predicting the amount of resources required by the local cell from how resources have actually been used using the above formula (1) and the like. The term "the amount of free resources" refers to the amount of free resources to be secured when the amount of required resources corresponding thereto is predicted.

As illustrated in FIG. 7, values are set in the free resources conversion table storage unit 182 such that the amount of free resources decreases with a decrease in the amount of required resources. This is because if the amount of required resources is determined to be large, handover is likely to fail due to a shortage of resources, and it is preferable to secure a larger amount of free resources. If the amount of required resources is determined to be small, handover is unlikely to fail due to a shortage of resources, and the amount of resources to be secured may be small. If the amount of resources to be secured is small, since the need to hand over a mobile station to an adjacent cell for securing resources decreases, an unwanted handover can be reduced.

Note that the amount of free resources may be calculated by applying the amount of required resources or the like obtained by using the above formula (1) and the like to a specific formula instead of being acquired from a conversion table as in FIG. 7. In this case, the formula is set such that the amount of free resources decreases with a decrease in the amount of required resources.

The handover object selection unit 183 refers to the connection status storage unit 130 and determines whether free resources, the amount of which is determined by the required resources determination unit 181 to be required, are secured or not. If free resources are insufficient, the handover object selection unit 183 refers to the connection status storage unit 130, selects a mobile station capable of being handed over, and instructs the connection control unit 120 to execute handover of the selected mobile station.

If no mobile station capable of being handed over is found, the handover object selection unit 183 searches for a mobile station which may become capable of being handed over by changing the QoS. If such a mobile station is found, the handover object selection unit 183 instructs the connection control unit 120 to cause the mobile station to be handed over and the QoS to be changed. As described above, the QoS change allows a mobile station which is incapable of being handed over while maintaining the QoS to be handed over to another cell.

QoS conversion by the handover object selection unit 183 is performed based on the QoS of a service currently utilized by each mobile station and conversion tables stored in the QoS conversion table storage unit 190. For example, the QoS of a service currently utilized by each mobile station is conveyed from the host device via the core network 10 and is stored in the connection status storage unit 130.

Note that even if free resources are insufficient, handover of a large number of mobile stations to another cell abruptly changes the communication status of the adjacent cell and thus may be undesirable. For this reason, even if free resources are insufficient, and there are a large number of mobile stations capable of being handed to another cell, the number of mobile stations to be handed over may be limited to a specific number. In this case, the identification number of a mobile station which has been handed over to another cell for securing resources may be stored for a specific period, and the priority of a mobile station whose identification number is stored in selection of a handover object may be lowered. This is because if a single mobile station is repeatedly handed over between a local cell and an adjacent cell for resources securing when not only the local cell but also the adjacent cell has a shortage of resources, a communication breakdown is likely to occur at the time of any handover process.

The QoS conversion table storage unit 190 stores conversion tables for QoS conversion. These conversion tables are used not only to change the QoS of a mobile station when the mobile station with the maintained QoS cannot be handed over to another cell but also to hand over a mobile station to a cell of a different communication system.

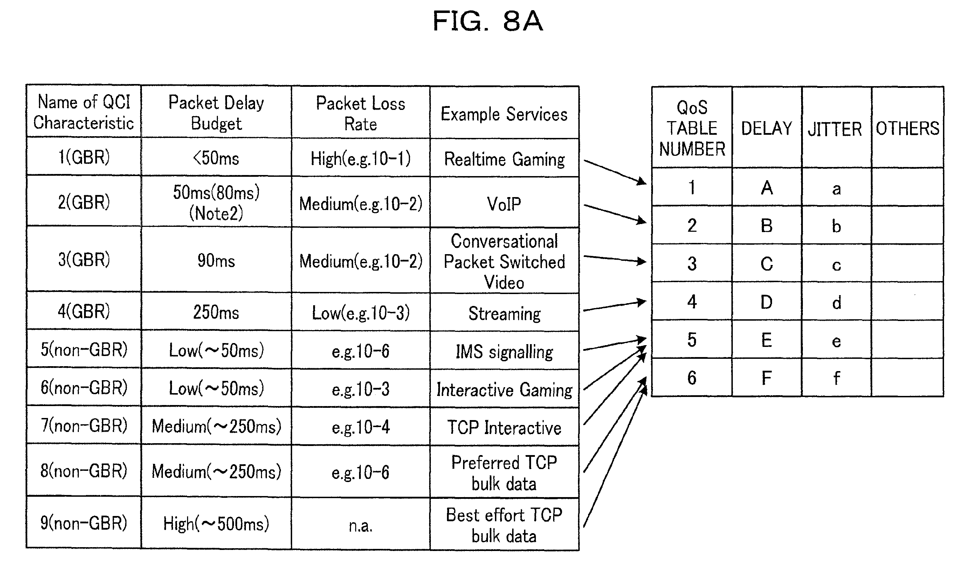

FIG. 8A is a chart illustrating an example of a QoS conversion table with QoS maintenance. The QoS conversion table illustrated in FIG. 8A is used to hand over a mobile station to a cell of a different communication system while maintaining the QoS, and the levels of the QoS before and after conversion are equivalent.

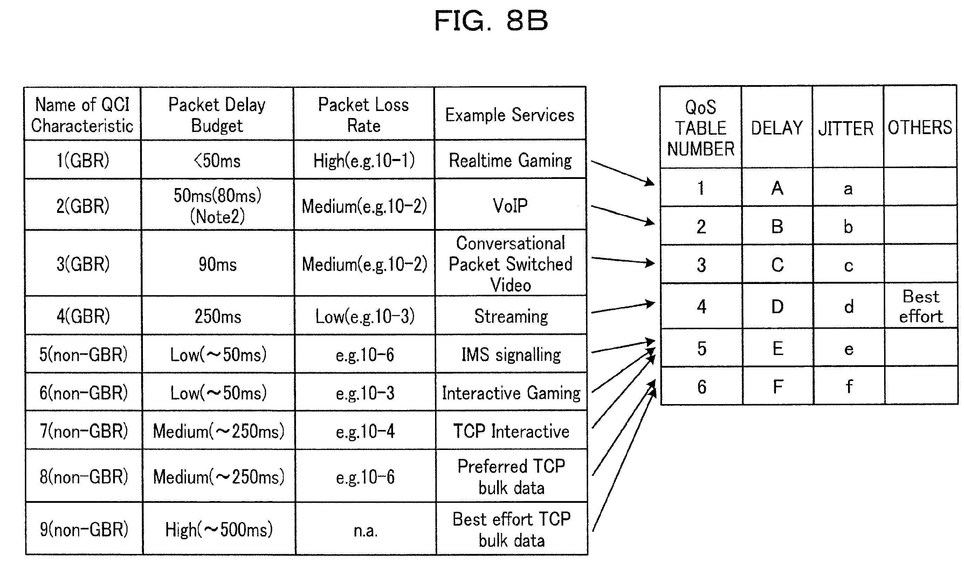

FIG. 8B is a chart illustrating an example of a QoS conversion table without QoS maintenance. The QoS conversion table illustrated in FIG. 8B is used to change the QoS of a mobile station and hand over the mobile station to a cell of a different communication system, and the level of the QoS after the conversion is set to be lower than that of the QoS before the conversion. Although not illustrated, in a conversion table used to change the QoS of a mobile station and hand over the mobile station to a cell of the same communication system, the level of a QoS after conversion is set to be lower than that of the QoS before the conversion.

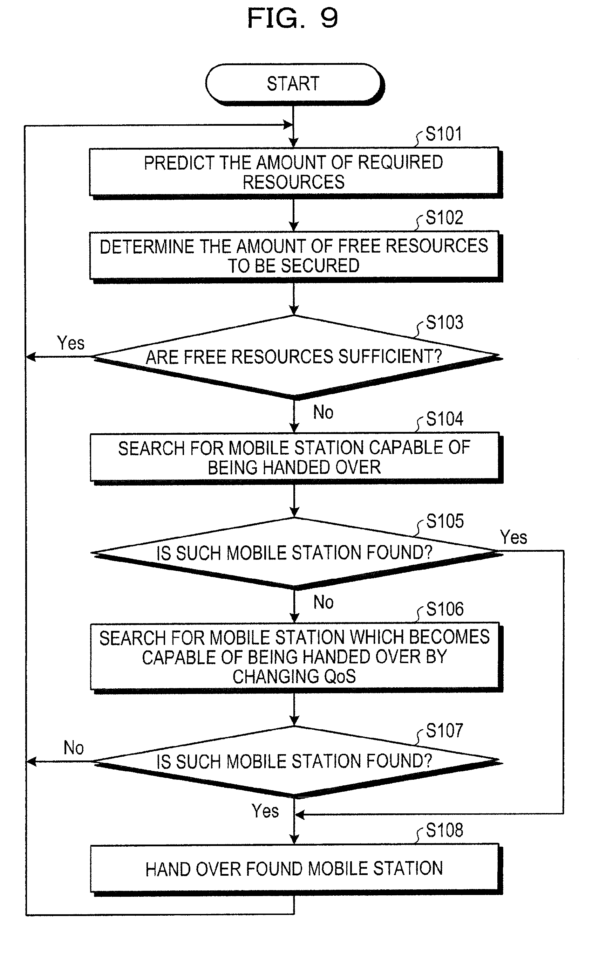

The procedure for a resources securing process executed by the base station 101 will be described. FIG. 9 is a flow chart illustrating the procedure for the resources securing process. As illustrated in FIG. 9, the required resources determination unit 181 predicts the amount of resources required by the local cell using the above formula (1) and the like (step S101). The required resources determination unit 181 determines the amount of free resources to be secured from the predicted amount of required resources (step S102).

If the actual amount of free resources is equal to or larger than the amount of free resources determined in step S102 (YES in step S103), the handover object selection unit 183 does nothing, and the process restarts from step S101. On the other hand, if the actual amount of free resources is smaller than the amount of free resources determined in step S102 (NO in step S103), the handover object selection unit 183 searches for a mobile station capable of being handed over (step S104). If any mobile station capable of being handed over is found (YES in step S105), the connection control unit 120 hands over the found mobile stations to another cell (step S108). After that, the process restarts from step S101.

On the other hand, if no mobile station capable of being handed over is found (NO in step S105), the handover object selection unit 183 searches for a mobile station which becomes capable of being handed over by changing the QoS (step S106). If any mobile station that becomes capable of being handed over by changing the QoS is found (YES in step S107), the connection control unit 120 changes the QoS of each found mobile station and hands over the mobile station to another cell (step S108). After that, the process restarts from step S101. On the other hand, if no mobile station that becomes capable of being handed over by changing the QoS is found (NO in step S107), no mobile station is handed over, and the process restarts from step S101.

As has been described above, in this embodiment, the amount of required resources is predicted based on how resources have actually been used and the like, and a mobile station capable of being handed over is handed over to another cell based on the prediction result. It is thus possible to improve the continuity of communication during cell-to-cell movement.

In the above-described example, all resources are secured without distinction. However, the technique disclosed by the present application can also be applied to a case where some resources are secured (e.g., only resources requiring a bandwidth guarantee are secured).

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1.   A base station comprising:

a required resources determination unit which determines the amount of free resources to be secured for a local cell on the basis of statistical information including a record of how resources have actually been used;
a handover object selection unit which selects a mobile station capable of being handed over to another cell among mobile stations within the local cell if the actual amount of free resources is smaller than the amount of free resources to be secured as determined by the required resources determination unit; and
a connection control unit which hands over the mobile station selected by the handover object selection unit to another cell.

2.   The base station according to claim 1, wherein the required resources determination unit predicts the amount of resources required by the local cell from a traffic model indicating a relationship among the amount of resources required by a mobile station which is to be handed over from another cell, the amount of resources required by a mobile station which starts a new communication in the local cell, the amount of resources required by a mobile station which is to be handed over to another cell, and the amount of resources required by a mobile station which ends communication in the local cell, and from the statistical information, and determines the amount of free resources to be secured for the local cell based on the amount of resources.

3.   The base station according to any one of claims 1 and 2, wherein the statistical information includes a record for each day of the week of how resources have actually been used.

4.   The base station according to any one of claims 1 to 3, wherein the statistical information includes a record for each time period of how resources have actually been used.

5.   The base station according to any one of claims 1 to 4, further comprising a statistical information management unit which updates the statistical information based on resources usage in the local cell.

**6.** The base station according to claim 5, wherein the statistical information management unit exchanges the statistical information with another base station.

**7.** The base station according to claim 6, wherein the statistical information management unit transmits the statistical information to another base station if a content of the statistical information changes by a specific amount or more.

**8.** The base station according to claim any one of claims 1 to 7, wherein the handover object selection unit selects a mobile station which becomes capable of being handed over to another cell by changing a QoS if the actual amount of free resources is smaller than the amount of free resources to be secured as determined by the required resources determination unit, and there is no mobile station capable of being handed over to another cell among the mobile stations within the local cell.

**9.** The base station according to any one of claims 1 to 8, wherein the handover object selection unit does not select a specific number of mobile stations or more even if there are a plurality of mobile stations capable of being handed over to another cell among the mobile stations within the local cell.

**10.** A resources securing method performed by a base station, comprising:

determining the amount of free resources to be secured for a local cell based on statistical information including a record of how resources have actually been used,
selecting a mobile station capable of being handed over to another cell among mobile stations within the local cell if the actual amount of free resources is smaller than the determined amount of free resources to be secured, and
handing over the selected mobile station to another cell.

**11.** The resources securing method according to claim 10, wherein the base station predicts the amount of resources required by the local cell from a traffic model indicating a relationship among the amount of resources required by a mobile station which is to be handed over from another cell, the amount of resources required by a mobile station which starts a new communication in the local cell, the amount of resources required by a mobile station which is to be handed over to another cell, and the amount of resources required by a mobile station which ends communication in the local cell, and from the statistical information, and determines the amount of free resources to be secured for the local cell based on the amount of resources.

**12.** The resources securing method according to any one of claims 10 and 11, wherein the statistical information includes a record for each day of the week of how resources have actually been used.

**13.** The resources securing method according to any one of claims 10 to 12, wherein the statistical information includes a record for each time period of how resources have actually been used.

**14.** The resources securing method according to any one of claims 10 to 13, wherein the statistical information is updated based on usage of resources in the local cell.

**15.** The resources securing method according to any one of claims 10 to 14, wherein the statistical information is exchanged with another base station.

# FIG. 1

# FIG. 2

CELL#6

CELL#5

Hi(6)

CELL#1

Hi(5)

Ho(6)

Hi(1)

CELL#0

Ho(5)

N

Ho(1)

Ho(4)

T

Ho(2)

Hi(4)

Ho(3)

Hi(2)

CELL#4

Hi(3)

CELL#2

CELL#3

# FIG. 3

CELL#6

CELL#5

CELL#1

CELL#0

CELL#2

CELL#4

CELL#3

# FIG. 4

BASE STATION — 101

10

STATISTICAL INFORMATION STORAGE UNIT — 170

LOCAL STATION STATISTICAL INFORMATION — 171

ADJACENT STATION STATISTICAL INFORMATION — 172

FREE RESOURCES CONVERSION TABLE STORAGE UNIT — 182

REQUIRED RESOURCES DETERMINATION UNIT — 181

HANDOVER OBJECT SELECTION UNIT — 183

QoS CONVERSION TABLE STORAGE UNIT — 190

CN SIGNAL TRANSMITTER/ RECEIVER — 140

CONNECTION CONTROL UNIT — 120

STATISTICAL INFORMATION MANAGEMENT UNIT — 160

CONNECTION STATUS STORAGE UNIT — 130

RADIO SIGNAL TRANSMITTER/ RECEIVER — 110

BASE STATION — 102

INTER-BASE-STATION SIGNAL TRANSMITTER/ RECEIVER — 150

MOBILE STATION — 20a

## FIG. 5

| DAY OF THE WEEK | TIME PERIOD | THE AMOUNT OF RESOURCES USED | THE AMOUNT OF RESOURCES FOR NEW MOBILE STATION | THE NUMBER OF NEW MOBILE STATIONS | RATE OF OCCURRENCE OF NEW COMMUNICATIONS | RATE OF OCCURRENCE OF CONNECTION COMMUNICATIONS | HANDOVER RATE TO ADJACENT CELL | | |
|---|---|---|---|---|---|---|---|---|---|
| | | | | | | | CELL#1 | CELL#2 | ... |
| SUNDAY/ HOLIDAY | 00:00~04:00 | xxx | xxx | xxx | xxx | xxx | xxx | xxx | ... |
| | 04:00~08:00 | xxx | xxx | xxx | xxx | xxx | xxx | xxx | ... |
| | 08:00~12:00 | xxx | xxx | xxx | xxx | xxx | xxx | xxx | ... |
| | 12:00~16:00 | xxx | xxx | xxx | xxx | xxx | xxx | xxx | ... |
| | 16:00~20:00 | xxx | xxx | xxx | xxx | xxx | xxx | xxx | ... |
| | 20:00~24:00 | xxx | xxx | xxx | xxx | xxx | xxx | xxx | ... |
| MONDAY | 00:00~04:00 | xxx | xxx | xxx | xxx | xxx | xxx | xxx | ... |
| | 04:00~08:00 | xxx | xxx | xxx | xxx | xxx | xxx | xxx | ... |
| | 08:00~12:00 | xxx | xxx | xxx | xxx | xxx | xxx | xxx | ... |
| | 12:00~16:00 | xxx | xxx | xxx | xxx | xxx | xxx | xxx | ... |
| | 16:00~20:00 | xxx | xxx | xxx | xxx | xxx | xxx | xxx | ... |
| | 20:00~24:00 | xxx | xxx | xxx | xxx | xxx | xxx | xxx | ... |
| ... | ... | ... | ... | ... | ... | ... | ... | ... | ... |

171

EP 2 150 081 A2

# FIG. 6

| DAY OF THE WEEK | TIME PERIOD | STATUS OF HANDOVER FROM ADJACENT CELL | | | | |
|---|---|---|---|---|---|---|
| | | CELL#1 | | CELL#2 | | ... |
| | | HANDOVER RATE | THE AMOUNT OF RESOURCES USED | HANDOVER RATE | THE AMOUNT OF RESOURCES USED | |
| SUNDAY/ HOLIDAY | 00:00～04:00 | XXX | XXX | XXX | XXX | ... |
| | 04:00～08:00 | XXX | XXX | XXX | XXX | ... |
| | 08:00～12:00 | XXX | XXX | XXX | XXX | ... |
| | 12:00～16:00 | XXX | XXX | XXX | XXX | ... |
| | 16:00～20:00 | XXX | XXX | XXX | XXX | ... |
| | 20:00～24:00 | XXX | XXX | XXX | XXX | ... |
| MONDAY | 00:00～04:00 | XXX | XXX | XXX | XXX | ... |
| | 04:00～08:00 | XXX | XXX | XXX | XXX | ... |
| | 08:00～12:00 | XXX | XXX | XXX | XXX | ... |
| | 12:00～16:00 | XXX | XXX | XXX | XXX | ... |
| | 16:00～20:00 | XXX | XXX | XXX | XXX | ... |
| | 20:00～24:00 | XXX | XXX | XXX | XXX | ... |
| ... | ... | ... | ... | ... | ... | ... |

172

# FIG. 7

| THE AMOUNT OF REQUIRED RESOURCES | THE AMOUNT OF FREE RESOURCES |
|---|---|
| ～1Gbps | 1Gbps |
| 1～2Gbps | 1.5Gbps |
| 2～4Gbps | 2Gbps |
| 4～8Gbps | 2.5Gbps |
| 8Gbps～ | 3Gbps |

# FIG. 8A

| Name of QCI Characteristic | Packet Delay Budget | Packet Loss Rate | Example Services |
|---|---|---|---|
| 1(GBR) | <50ms | High(e.g.10-1) | Realtime Gaming |
| 2(GBR) | 50ms(80ms) (Note2) | Medium(e.g.10-2) | VoIP |
| 3(GBR) | 90ms | Medium(e.g.10-2) | Conversational Packet Switched Video |
| 4(GBR) | 250ms | Low(e.g.10-3) | Streaming |
| 5(non-GBR) | Low(~50ms) | e.g.10-6 | IMS signalling |
| 6(non-GBR) | Low(~50ms) | e.g.10-3 | Interactive Gaming |
| 7(non-GBR) | Medium(~250ms) | e.g.10-4 | TCP Interactive |
| 8(non-GBR) | Medium(~250ms) | e.g.10-6 | Preferred TCP bulk data |
| 9(non-GBR) | High(~500ms) | n.a. | Best effort TCP bulk data |

| QoS TABLE NUMBER | DELAY | JITTER | OTHERS |
|---|---|---|---|
| 1 | A | a | |
| 2 | B | b | |
| 3 | C | c | |
| 4 | D | d | |
| 5 | E | e | |
| 6 | F | f | |

EP 2 150 081 A2

## FIG. 8B

| Name of QCI Characteristic | Packet Delay Budget | Packet Loss Rate | Example Services |
|---|---|---|---|
| 1(GBR) | <50ms | High(e.g.10−1) | Realtime Gaming |
| 2(GBR) | 50ms(80ms) (Note2) | Medium(e.g.10−2) | VoIP |
| 3(GBR) | 90ms | Medium(e.g.10−2) | Conversational Packet Switched Video |
| 4(GBR) | 250ms | Low(e.g.10−3) | Streaming |
| 5(non-GBR) | Low(~50ms) | e.g.10−6 | IMS signalling |
| 6(non-GBR) | Low(~50ms) | e.g.10−3 | Interactive Gaming |
| 7(non-GBR) | Medium(~250ms) | e.g.10−4 | TCP Interactive |
| 8(non-GBR) | Medium(~250ms) | e.g.10−6 | Preferred TCP bulk data |
| 9(non-GBR) | High(~500ms) | n.a. | Best effort TCP bulk data |

| QoS TABLE NUMBER | DELAY | JITTER | OTHERS |
|---|---|---|---|
| 1 | A | a | |
| 2 | B | b | |
| 3 | C | c | |
| 4 | D | d | Best effort |
| 5 | E | e | |
| 6 | F | f | |

EP 2 150 081 A2

# FIG. 9

START

S101
PREDICT THE AMOUNT OF REQUIRED
RESOURCES

S102
DETERMINE THE AMOUNT OF FREE RESOURCES
TO BE SECURED

S103
ARE FREE RESOURCES SUFFICIENT?

Yes

No

S104
SEARCH FOR MOBILE STATION CAPABLE OF
BEING HANDED OVER

S105
IS SUCH MOBILE STATION FOUND?

Yes

No

S106
SEARCH FOR MOBILE STATION WHICH BECOMES
CAPABLE OF BEING HANDED OVER BY
CHANGING QoS

S107
IS SUCH MOBILE STATION FOUND?

No

Yes

S108
HAND OVER FOUND MOBILE STATION

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003348007 A
- JP 2004336424 A